# EUROPEAN PATENT APPLICATION

(11) **EP 4 372 232 A1**
(43) Date of publication of application: **22.05.2024**
(21) Application number: 22841378.7
(22) Date of filing: 12.07.2022
(51) Int. Cl.: F04D 29/24, F04D 13/06

(54) **ELECTRONIC WATER PUMP**

(30) Priority: 13.07.2021 CN 202121590593 U
(71) Applicant: Zhejiang Dunan Artificial Environment Co., Ltd., Shaoxing, Zhejiang 311835 (CN)
(72) Inventor: ZHOU, Xiaowei, Shaoxing, Zhejiang 311835 (CN); WANG, Junjie, Shaoxing, Zhejiang 311835 (CN)
(74) Representative: HGF
(86) International application number: PCT/CN2022/105216
(87) International publication number: WO 2023/284743

(57) **Abstract**

An electronic water pump, including: a pump head (10), a pump housing (20), an isolation sleeve (30), an impeller assembly (40), a first gasket (50), and a rotation stopping structure, wherein a mounting portion (11) is disposed on the pump head (10); the pump head (10) is used for sealing the pump housing(20); the isolation sleeve (30) is disposed between the pump head (10) and the pump housing (20); the impeller assembly (40) is disposed between the pump head (10) and the isolation sleeve (30); and the first gasket (50) is disposed at an end of the mounting portion (11) that is close to the impeller assembly (40), and the first gasket (50) is used for isolating the mounting portion (11) from the impeller assembly (40). The apparatus may avoid relatively large noise.

## Description

### Cross-Reference to Related Application

The present invention claims the priority of Chinese Patent Application 202121590593.3, filed in the China Patent Office on July 13, 2021, and entitled "Electronic Water Pump".

### Technical Field

The present invention relates to the technical field of water pumps, and in particular to an electronic water pump.

### Background

Since an impeller assembly of an electronic water pump is installed on a pump head, when the impeller assembly rotates, a friction force between the impeller assembly and the pump head is relatively large, thereby being prone to generating relatively large abrasion. In an art known to inventors, a gasket is generally disposed between the impeller assembly and the pump head, so that the gasket isolates the impeller assembly from the pump head. However, when the impeller assembly rotates, the gasket rotates accordingly, and the gasket rubs and collides with the impeller assembly or the pump head, thereby generating relatively large noise, and thus affecting the normal use of a user.

### Summary

The present invention provides an electronic water pump, so as to solve the problem that an electronic water pump in the prior art is prone to generating relatively large noise.

The present invention provides an electronic water pump, including: a pump head, wherein a mounting portion is disposed on the pump head; a pump housing, which is used for sealing the pump housing; an isolation sleeve disposed between the pump head and the pump housing; an impeller assembly disposed between the pump head and the isolation sleeve; a first gasket, which is disposed at an end of the mounting portion that is close to the impeller assembly, wherein the first gasket is used for isolating the mounting portion from the impeller assembly; and a rotation stopping structure disposed between the first gasket and the mounting portion, wherein the rotation stopping structure is capable of limiting a rotation of the first gasket relative to the mounting portion.

By applying the technical solution of the present invention, the pump head is provided with the mounting portion, the impeller assembly is disposed between the pump head and the isolation sleeve, the first gasket is disposed at the end of the mounting portion that is close to the impeller assembly, the first gasket is used for isolating the mounting portion from the impeller assembly, the rotation stopping structure is disposed between the first gasket and the mounting portion, and the rotation stopping structure is capable of limiting the rotation of the first gasket relative to the mounting portion. By providing the rotation stopping structure, the first gasket can be prevented from rotating along with the impeller assembly, thereby avoiding noise generated by the friction and collision between the first gasket and the pump head or between the first gasket and the impeller assembly, and thus reducing the noise of the electronic water pump during operation.

Further, the first gasket includes a gasket body and an extension portion, the gasket body is located at an end portion of the mounting portion that is close to the impeller assembly, the extension portion is connected with an edge of the gasket body, the extension portion extends in a direction away from the impeller assembly, a side wall of the mounting portion is provided with at least one limiting rib, and the extension portion cooperates with the at least one limiting rib to form the rotation stopping structure. The extension portion and the limiting rib are simple in structure and easy to process. The extension portion may cooperate with the limiting rib to limit the rotation of the first gasket.

Further, the mounting portion is provided with a first clamping structure, the first gasket is provided with a second clamping structure, and the first clamping structure is clamped with the second clamping structure, so as to limit a displacement of the first gasket in the axial direction of the mounting portion. The first gasket does not move in the axial direction of the mounting portion, so that the first gasket can be prevented from colliding with the impeller assembly or the pump head, thereby further reducing the noise of the electronic water pump during operation.

Further, the second clamping structure is a protruding structure disposed on the extension portion, and the protruding structure extends towards the mounting portion. The protruding structure is disposed on the extension portion, thereby being simple in structure and easy to process.

Further, the first clamping structure is a recessed structure disposed on a side wall of the mounting portion, and the protruding structure is matched and clamped with the recessed structure. The protruding structure is clamped in the recessed structure, thereby preventing the first gasket from moving in the axial direction of the mounting portion.

Further, the mounting portion has a first segment and a second segment, which are connected with each other, the first segment is disposed close to the impeller assembly, a diameter of the first segment is greater than a diameter of the second segment, a step surface is formed at a joint of the first segment and the second segment, and the step surface is of the recessed structure. The protruding structure is clamped on the second segment, thereby limiting the first gasket from moving in the axial direction of the mounting portion. Since the step surface is of the recessed structure, the processing difficulty is reduced.

Further, the extension portion includes a plurality of clamping jaws, and the plurality of clamping jaws are disposed at intervals in a circumferential direction of the first gasket. The plurality of clamping jaws are uniformly stressed to prevent the first gasket from skewing, so as to improve the stability of the overall connection.

Further, there are a plurality of limiting ribs, the limiting ribs are annularly disposed at intervals in the circumferential direction of the mounting portion, the number of the clamping jaws is the same as that of the limiting ribs, and the clamping jaws and the limiting ribs are disposed on a one-to-one correspondence basis. The structure is simple, the installation is convenient, and the processing difficulty is low.

Further, the electronic water pump further includes a second gasket, and the second gasket is disposed between the impeller assembly and the isolation sleeve. The second gasket is used for isolating the impeller assembly from the isolation sleeve, so as to prevent abrasion caused by the mutual friction between the impeller assembly and the isolation sleeve.

Further, the impeller assembly includes an impeller and a connecting rod, the connecting rod is used for connecting the impeller and a rotor assembly, and the connecting rod and the impeller are of an integrated structure; and the electronic water pump further includes the rotor assembly and a rotating shaft, the connecting rod, the impeller and the rotor assembly are sleeved on the rotating shaft, and two ends of the rotating shaft are respectively fixed to the mounting portion and the isolation sleeve. In this way, the impeller assembly can be conveniently installed in the isolation sleeve, and the installation efficiency is thus improved.

### Brief Description of the Drawings

The drawings, which constitute a portion of the present invention, are used to provide a further understanding of the present invention, and the schematic embodiments of the present invention and the description thereof are used to explain the present invention, and do not constitute an improper limitation on the present invention. In the drawings:
Fig. 1 illustrates a schematic diagram of an internal structure of an electronic water pump provided in the present invention;
Fig. 2 illustrates a schematic structural diagram of a pump head provided in the present invention; and
Fig. 3 illustrates a schematic structural diagram of a first gasket provided in the present invention.

The above drawings include the following reference signs:
10. pump head; 11. mounting portion; 111. first segment; 112. second segment;
20. pump housing;
30. isolation sleeve;
40. impeller assembly; 41. impeller; 42. connecting rod; 43. rotor assembly; 44. rotating shaft;
50. first gasket; 51. gasket body; 52. extension portion; 521. protruding structure;
60. limiting rib;
70. second gasket.

### Detailed Description of the Embodiments

A clear and complete description of technical solutions in the embodiments of the present invention will be given below, in combination with the drawings in the embodiments of the present invention. Apparently, the embodiments described below are merely a part, but not all, of the embodiments of the present invention. The following description of at least one exemplary embodiment is merely illustrative in nature and is in no way intended as any limitation on the present invention and its invention or use. All of other embodiments, obtained by those ordinary skilled in the art based on the embodiments in the present invention without any creative effort, fall into the protection scope of the present invention.

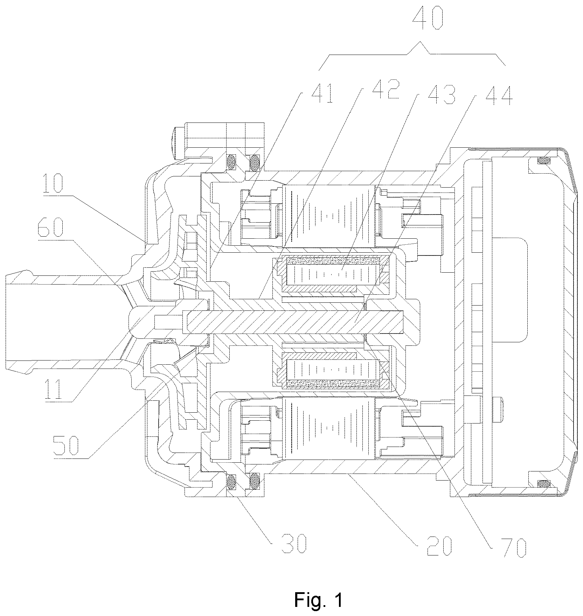

As shown in Fig. 1, an embodiment of the present invention provides an electronic water pump, including: a pump head 10, a pump housing 20, an isolation sleeve 30, an impeller assembly 40, a first gasket 50 and a rotation stopping structure. The pump head 10 is provided with a mounting portion 11; the pump head 10 is used for sealing the pump housing 20; the isolation sleeve 30 is disposed between the pump head 10 and the pump housing 20; the impeller assembly 40 is disposed between the pump head 10 and the isolation sleeve 30; the first gasket 50 is disposed at an end of the mounting portion 11 that is close to the impeller assembly 40, and the first gasket 50 is used for isolating the mounting portion 11 from the impeller assembly 40; and the rotation stopping structure is disposed between the first gasket 50 and the mounting portion 11, and the rotation stopping structure is capable of limiting a rotation of the first gasket 50 relative to the mounting portion 11. The mounting portion 11 is used for mounting the impeller assembly, optionally, the mounting portion 11 is disposed at a middle of an inner side of the pump head 10, and the mounting portion 11 is of a protruding structure. The isolation sleeve 30 divides an interior of the pump housing 20 into two spaces, the impeller assembly 40 is disposed between the pump head 10 and the isolation sleeve, and the impeller assembly 40 is disposed on the mounting portion 11 of the pump head 10. The first gasket 50 isolates the mounting portion 11 from the impeller assembly 40, so as to prevent mutual friction therebetween. When the impeller assembly 40 rotates, the rotation stopping structure may prevent the first gasket 50 from rotating along with the impeller assembly 40, thereby reducing an operation noise of the electronic water pump.

In the present technical solution, the pump head 10 is provided with the mounting portion 11, the impeller assembly 40 is disposed between the pump head 10 and the isolation sleeve 30, the first gasket 50 is disposed at the end of the mounting portion 11 that is close to the impeller assembly 40, the first gasket 50 is used for isolating the mounting portion 11 from the impeller assembly 40, the rotation stopping structure is disposed between the first gasket 50 and the mounting portion 11, and the rotation stopping structure is capable of limiting the rotation of the first gasket 50 relative to the mounting portion 11. By providing the rotation stopping structure, the impeller assembly 40 can be prevented from, while rotating, driving the first gasket 50 to rotate, thereby avoiding friction and collision between the first gasket 50 and the impeller assembly 40 or the pump head 10, and thus reducing the noise of the electronic water pump during operation.

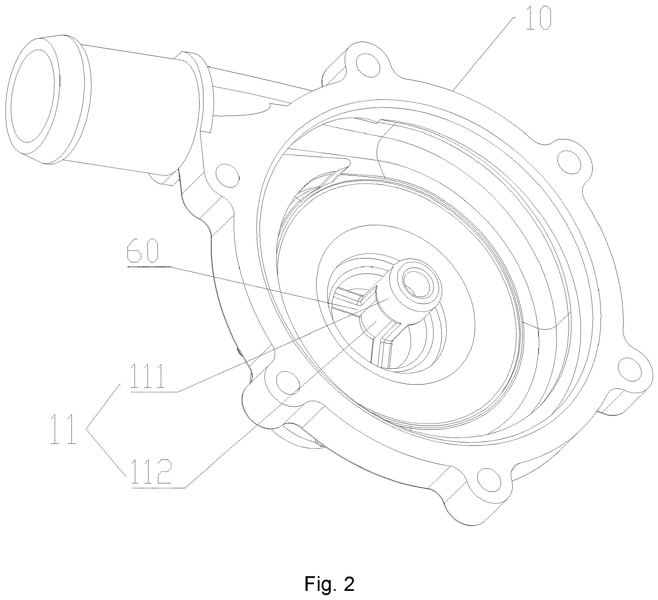

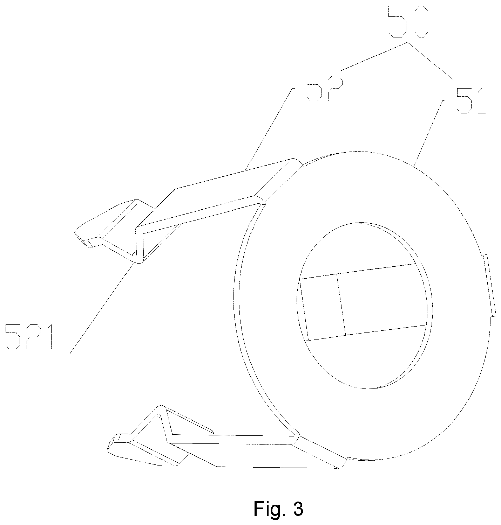

As shown in Fig. 2 and Fig. 3, in some embodiments, the first gasket 50 includes a gasket body 51 and an extension portion 52, the gasket body 51 is located at an end portion of the mounting portion 11 that is close to the impeller assembly 40, the extension portion 52 is connected with an edge of the gasket body 51, the extension portion 52 extends in a direction away from the impeller assembly 40, a side wall of the mounting portion 11 is provided with at least one limiting rib 60, and the extension portion 52 cooperates with the at least one limiting rib 60 to form the rotation stopping structure. The gasket body 51 is used for isolating the mounting portion 11 from the impeller assembly 40. The extension portion 52 cooperates with the limiting rib 60, the limiting rib 60 limits the extension portion 52 from rotating in a circumferential direction of the mounting portion 11, thereby limiting the rotation of the first gasket 50. In some embodiments, the gasket body 51 and the extension portion 52 are of an integrally formed structure. In some embodiments, the first gasket 50 is made of a wear-resistant material having a small surface friction coefficient such as stainless steel, so as to further reduce the friction between the first gasket 50 and the mounting portion 11 and between the first gasket 50 and the impeller assembly 40. As shown in Fig. 2 and Fig. 3, in the present embodiment, the mounting portion 11 is provided with a first clamping structure, the first gasket 50 is provided with a second clamping structure, and the first clamping structure is clamped with the second clamping structure to limit a displacement of the first gasket 50 in an axial direction of the mounting portion 11. By providing the first clamping structure and the second clamping structure, the movement of the first gasket 50 in the axial direction of the mounting portion 11 can be limited, so that the first gasket 50 can be prevented from impacting the impeller assembly 40 and the mounting portion 11, thereby further reducing the noise of the electronic water pump during operation.

In some embodiments, the second clamping structure is a protruding structure 521 disposed on the extension portion 52, and the protruding structure 521 extends towards the mounting portion 11. Optionally, the protruding structure 521 may be a projection structure. In the present embodiment, the protruding structure 521 is a bent structure, and the bent structure is V-shaped and is bent towards the mounting portion 11. In the above solution, the structure is simple, and the first gasket 50 is conveniently processed.

In some embodiments, the first clamping structure is a recessed structure disposed on a side wall of the mounting portion 11, and the protruding structure 521 is matched and clamped with the recessed structure. The protruding structure 521 is clamped in the recessed structure, and the protruding structure 521 abuts against the recessed structure, so that the first gasket 50 can be limited from moving in the axial direction of the mounting portion 11. In some embodiments, the recessed structure may be a groove structure, and may also be set as step structure, as long as the recessed structure be matched and clamped with the second clamping structure.

In some embodiments, the mounting portion 11 has a first segment 111 and a second segment 112, which are connected with each other, the first segment 111 is disposed close to the impeller assembly 40, a diameter of the first segment 111 is greater than a diameter of the second segment 112, a step surface is formed at a joint of the first segment 111 and the second segment 112, and the step surface forms the recessed structure. The protruding structure 521 is clamped on the second segment 112, thereby limiting the first gasket 50 from moving in the axial direction of the mounting portion 11. Since the step surface is of the recessed structure, the processing difficulty is reduced. Optionally, the recessed structure may also be an annular groove or a local groove formed in the side wall of the mounting portion 11.

In the present embodiment, the extension portion 52 includes a plurality of clamping jaws, and the plurality of clamping jaws are disposed at intervals in the circumferential direction of the first gasket 50. That is, the plurality of clamping jaws are clamped on the side wall of the mounting portion 11 and are disposed at intervals along the side wall of the mounting portion 11, and the plurality of clamping jaws are uniformly stressed to prevent the first gasket 50 from skewing, so as to improve a stability of the overall connection. The extension portion 52 is set to be of a clamping jaw structure, thereby being simple in structure and convenient to process.

In the present embodiment, there are a plurality of limiting ribs 60, the limiting ribs 60 are annularly disposed at intervals in the circumferential direction of the mounting portion 11, the number of the clamping jaws is the same as that of the limiting ribs 60, and the clamping jaws and the limiting ribs 60 are disposed on a one-to-one correspondence basis. That is, each clamping jaw is clamped between the limiting ribs 60, so as to limit, by the limiting ribs 60, the clamping jaw from rotating clockwise or counterclockwise around the mounting portion 11. The rotation stopping structure includes the limiting ribs 60 and the clamping jaws, thereby being simple in structure, convenient to install and low in processing difficulty.

Further, the limiting rib 60 extends in a radial direction of the mounting portion 11 and is connected with the pump head 10.

In the present embodiment, the electronic water pump further includes a second gasket 70, and the second gasket 70 is disposed between the impeller assembly 40 and the isolation sleeve 30. The second gasket 70 is used for isolating the impeller assembly 40 from the isolation sleeve 30, so as to prevent abrasion caused by a mutual friction between the impeller assembly 40 and the isolation sleeve 30. In some embodiments, the second gasket 70 is made of a material having a small surface friction coefficient such as stainless steel, so as to reduce the friction between the second gasket 70 and the impeller assembly 40 and between the second gasket 70 and the isolation sleeve 30.

In the present embodiment, the impeller assembly 40 includes an impeller 41 and a connecting rod 42, the connecting rod 42 is used for connecting the impeller 41 and a rotor assembly 43, and the connecting rod 42 and the impeller 41 are of an integrated structure; the electronic water pump further includes the rotor assembly 43 and a rotating shaft 44, the connecting rod 42, the impeller 41 and the rotor assembly 43 are sleeved on the rotating shaft 44, and two ends of the rotating shaft 44 are respectively fixed to the mounting portion 11 and the isolation sleeve 30. The impeller 41 is disposed close to the mounting portion 11, the connecting rod 42 is connected with the end of the impeller 41 that is away from the mounting portion 11, and the rotor assembly 43 is sleeved on the connecting rod 42. In this way, the impeller assembly 40 can be conveniently installed in the isolation sleeve 30, and the installation efficiency is thus improved.

In the present technical solution, the pump head 10 is provided with the mounting portion 11, the impeller assembly 40 is disposed between the pump head 10 and the isolation sleeve 30, the first gasket 50 is disposed at the end of the mounting portion 11 that is close to the impeller assembly 40, the first gasket 50 is used for isolating the mounting portion 11 from the impeller assembly 40, the rotation stopping structure is disposed between the first gasket 50 and the mounting portion 11, therefore by providing the rotation stopping structure, the impeller assembly 40 can be prevented from, while rotating, from driving the first gasket 50 to rotate, thereby reducing the noise of the electronic water pump during operation; and the rotation stopping structure includes the extension portion 52 connected with the first gasket body 51, and the limiting ribs 60 disposed on the side wall of the mounting portion 11, the extension portion 52 includes the plurality of clamping jaws, the clamping jaws and the limiting ribs 60 are disposed on the one-to-one correspondence basis, the limiting ribs 60 limit the first gasket 50 from rotating clockwise and counterclockwise along the mounting portion 11, and the rotation stopping structure has the advantages of being simple in structure, convenient to mount and simple in processing technology; and by providing the protruding structure 521 and the recessed structure, the first gasket 50 can be limited from moving in the axial direction of the mounting portion 11, thereby preventing the first gasket 50 from colliding with the impeller assembly 40, and thus further reducing the generation of noise.

It should be noted that, terms used herein are for the purpose of describing specific embodiments, and are not intended to limit the exemplary embodiments according to the present invention. As used herein, unless the context clearly dictates otherwise, a singular form is intended to include a plural form as well. In addition, it should also be understood that, when the terms "contain" and/or "include" are used in the present specification, they indicate the presence of features, steps, operations, devices, components and/or combinations thereof.

Unless specifically stated otherwise, relative arrangements, numerical expressions and numerical values of components and steps set forth in these embodiments do not limit the scope of the present invention. Meanwhile, it should be understood that, for the convenience of description, the dimensions of various portions shown in the drawings are not drawn according to an actual proportional relationship. Techniques, methods and devices known to those ordinary skilled in related arts may not be discussed in detail, but where appropriate, such techniques, methods and devices should be considered as a portion of the authorized specification. In all examples shown and discussed herein, any specific value should be construed as illustrative only and not as restrictive. Accordingly, other examples of the exemplary embodiments may have different values. It should be noted that similar reference signs and letters refer to similar items in the following figures, so once a certain item is defined in one figure, it does not require further discussion in subsequent figures.

In the description of the present invention, it should be understood that orientation or position relationships indicated by orientation words such as "front, back, upper, lower, left, right", "transverse, longitudinal, vertical, horizontal" and "top, bottom" and the like are generally orientation or position relationships shown on the basis of the drawings, and are merely for the convenience of describing the present invention and simplifying the description, in the absence of opposite statements, these orientation words do not indicate or imply that the referred apparatuses or elements must have specific orientations or must be constructed and operated in specific orientations, and thus cannot be construed as limiting the protection scope of the present invention; and the orientation words "inside and outside" refer to the inside and outside of the contours of the components themselves.

For the convenience of description, spatially relative terms, such as "on", "above", "on the surface", "over" and the like, may be used herein to describe spatial position relationships between one device or feature and other devices or features shown in the figures. It should be understood that, the spatially relative terms are intended to contain different orientations of a device in use or operation in addition to the orientations described in the figures. For example, if the device in the figures is turned over, the device, which is described as "above other devices or structures" or "over other devices or structures" would then be positioned as "below other devices or structures" or "beneath other devices or structures". Thus, the exemplary term "above" may include both orientations of "above" and "below". The device may also be otherwise positioned (rotated by 90 degrees or at other orientations), and the spatially relative descriptions used herein are interpreted accordingly.

In addition, it should be noted that the terms "first", "second" and the like are used for defining components and parts, and are merely for the convenience of distinguishing the corresponding components and parts, and unless otherwise stated, the above words have no special meaning, and thus cannot be construed as limiting the protection scope of the present invention.

The above descriptions are only some embodiments of the present invention, and are not intended to limit the present invention. For those skilled in the art, the present invention may have various modifications and changes. Any modifications, equivalent replacements, improvements and the like, made within the spirit and principles of the present invention, shall be included within the protection scope of the present invention.

## Claims

1. An electronic water pump, comprising:
a pump head (10), wherein a mounting portion (11) is disposed on the pump head (10);
a pump housing (20), wherein the pump head (10) is used for sealing the pump housing (20);
an isolation sleeve (30) disposed between the pump head (10) and the pump housing (20);
an impeller assembly (40) disposed between the pump head (10) and the isolation sleeve (30);
a first gasket (50), which is disposed at an end of the mounting portion (11) that is close to the impeller assembly (40), wherein the first gasket (50) is used for isolating the mounting portion (11) from the impeller assembly (40); and
a rotation stopping structure disposed between the first gasket (50) and the mounting portion (11), wherein the rotation stopping structure is capable of limiting a rotation of the first gasket (50) relative to the mounting portion (11).

2. The electronic water pump according to claim 1, wherein the first gasket (50) comprises a gasket body (51) and an extension portion (52), the gasket body (51) is located at an end portion of the mounting portion (11) that is close to the impeller assembly (40), the extension portion (52) is connected with an edge of the gasket body (51), the extension portion (52) extends in a direction away from the impeller assembly (40), a side wall of the mounting portion (11) is provided with at least one limiting rib (60), and the extension portion (52) cooperates with the at least one limiting rib (60) to form the rotation stopping structure.

3. The electronic water pump according to claim 2, wherein the mounting portion (11) is provided with a first clamping structure, the first gasket (50) is provided with a second clamping structure, and the first clamping structure is clamped with the second clamping structure, so as to limit a displacement of the first gasket (50) in the axial direction of the mounting portion (11).

4. The electronic water pump according to claim 3, wherein the second clamping structure is a protruding structure (521) disposed on the extension portion (52), and the protruding structure (521) extends towards the mounting portion (11).

5. The electronic water pump according to claim 4, wherein the first clamping structure is a recessed structure disposed on a side wall of the mounting portion (11), and the protruding structure (521) is matched and clamped with the recessed structure.

6. The electronic water pump according to claim 5, wherein the mounting portion (11) has a first segment (111) and a second segment (112), which are connected with each other, the first segment (111) is disposed close to the impeller assembly (40), a diameter of the first segment (111) is greater than a diameter of the second segment (112), a step surface is formed at a joint of the first segment (111) and the second segment (112), and the step surface is of the recessed structure.

7. The electronic water pump according to claim 2, wherein the extension portion (52) comprises a plurality of clamping jaws, and the plurality of clamping jaws are disposed at intervals in a circumferential direction of the first gasket (50).

8. The electronic water pump according to claim 7, wherein there are a plurality of limiting ribs (60), the limiting ribs (60) are annularly disposed at intervals in the circumferential direction of the mounting portion (11), the number of the clamping jaws is the same as that of the limiting ribs (60), and the clamping jaws and the limiting ribs (60) are disposed on a one-to-one correspondence basis.

9. The electronic water pump according to claim 1, wherein the electronic water pump further comprises a second gasket (70), and the second gasket (70) is disposed between the impeller assembly (40) and the isolation sleeve (30).

10. The electronic water pump according to claim 9, wherein,
the impeller assembly (40) comprises an impeller (41) and a connecting rod (42), and the connecting rod (42) and the impeller (41) are of an integrated structure; and
the electronic water pump further comprises a rotor assembly (43) and a rotating shaft (44), the connecting rod (42), the impeller (41) and the rotor assembly (43) are sleeved on the rotating shaft (44), the connecting rod (42) is used for connecting the impeller (41) and the rotor assembly (43), and two ends of the rotating shaft (44) are respectively fixed to the mounting portion (11) and the isolation sleeve (30).
